# EUROPÄISCHE PATENTANMELDUNG

(11) **EP 1 388 786 A1**
(43) Veröffentlichungstag der Anmeldung: **11.02.2004**
(21) Anmeldenummer: 02360090.1
(22) Anmeldetag: 15.03.2002
(51) Int. Cl.: G06F 9/44

(54) **Benutzerschnittstelle für eine Mensch-Computer Interaktion**

(71) Anmelder: ALCATEL, 75008 Paris (FR)
(72) Erfinder: Waida, Wieslawa, 75210 Keltern (DE)
(74) Vertreter: Rausch, Gabriele, Dr.

(57) **Zusammenfassung**

Die Erfindung betrifft ein Verfahren zur Bereitstellung einer Benutzerschnittstelle (UI1) für eine Mensch - Computer Interaktion zwischen einem Nutzer (A) und einem Endgerät sowie ein Computersystem (CS), einen Server und ein Endgerät zur Durchführung des Verfahrens. Eine allgemeine, deklarativ beschriebene Beschreibung (UUID) der Mensch - Computer Interaktion wird codiert in einer ersten Beschreibungssprache abgespeichert. Ein Interpreter (INTERP) greift auf die abgespeicherte allgemeine Beschreibung (UUID) und auf einen endgerätespezifischen Datensatz (TUID1 bis TUID5) zu, der die multimodalen Eingabemöglichkeiten und/ oder Präferenzen des Endgerätes beschreibt. Gemäß der allgemeinen Beschreibung (UUID) der Mensch - Computer Interaktion und den multimodalen Eingabemöglichkeiten und/ oder Präferenzen des Endgerätes erstellt der Interpreter (INTERP) mindestens einen endgerätespezifischen Dialog (TSPDD1, TSPDD2) codiert in einer zweiten Beschreibungssprache. Der so erstellte mindestens eine Dialog (TSPDD1, TSPDD2) wird von einer Steuereinheit (CONTR) abgearbeitet.

## Beschreibung

Die Erfindung betrifft ein Verfahren zur Bereitstellung einer Benutzerschnittstelle für eine Mensch - Computer Interaktion zwischen einem Nutzer und einem Endgerät sowie ein Computersystem, einen Server und ein Endgerät zur Durchführung des Verfahrens.

Bei der Beschreibung der Darstellung und des Verhaltens von multimodalen Mensch - Computer Interaktionen sowie bei der Durchführung von multimodalen Mensch - Computer Interaktionen treten besondere Schwierigkeiten auf. Multimodale Mensch - Computer Interaktion bedeutet, dass für die Kommunikation zwischen Mensch und Computer parallel verschiedenartige Modalitäten verwendet werden. Verschiedene Modalitäten sind beispielsweise eine Kommunikation mittels Text, eine Kommunikation mittels Gestik, eine Kommunikation mittels (gesprochener) Sprache oder eine Kommunikation mittels sonstiger sensorischer Reize.

Die Erfindung geht nun von bekannten Verfahren aus, die für eine multimodale Interaktion zwischen Mensch und Computer verschiedene Browser verwenden, die jeweils für eine Modalität der Kommunikation verantwortlich sind. Ein solches Verfahren wird beispielsweise in dem Artikel "Talking heads and synthetic speech: an architecture for supporting electronic commerce", von J. Ostermann et al, ICME 2000 Proceedings, ISBN: 0-7803-6536-4, Seite 71-4 beschrieben.

Bei diesem Verfahren wird zur Bereitstellung einer multimodalen Benutzerschnittstelle eine Gesichtsanimation mit einer Sprache-Synthese verknüpft. Ein Gesichts-Modell, das der Gestik-Simulation dient, wird von einem Server in einen Client geladen. Der Client verwendet einen MPEG-4 kompatiblen Sprachsynthesizer. Dieser Sprachsynthesizer wird mit dem Gesichts-Modell verknüpft. Die Gestik eines auf einem Bildschirm des Benutzers dargestellten Gesichtes wird mittels der Sprachsynthese und des Gesichtsmodells gesteuert. Der Benutzer kommuniziert mit dem Client zum einen über einen üblichen Web-Browser. Zum anderen sendet der Server neben Inhalten, die von dem Web-Browser dargestellt werden, Text und Animations-Daten an den Client. Diese Daten werden von dem Sprachsynthesizer und dem Gesicht-Modell interpretiert und steuern die Gestik des auf dem Bildschirm zusätzlich dargestellten Gesichtes.

Die Verwendung von mehreren Browsern, von denen jeder für eine Modalität verantwortlich ist, verlangt einen komplizierten Synchronisationsmechanismus, welcher in der Praxis schwer zu implementieren ist.

Der Erfindung liegt nun die Aufgabe zugrunde, ein verbessertes Verfahren zur Bereitstellung von multimodalen Mensch - Computer Interaktionen anzugeben.

Die Erfindung wird gelöst von einem Verfahren zur Bereitstellung einer Benutzerschnittstelle für eine Mensch - Computer Interaktion nach der Lehre von Anspruch 1. Die Erfindung wird weiter gelöst von einem Computersystem mit mindestens einem Endgerät nach der Lehre von Anspruch 13. Die Erfindung wird weiter gelöst von einem Server eines Computersystems mit mindestens einem Endgerät nach der Lehre von Anspruch 14. Die Aufgabe wird weiter gelöst von einem Endgerät mit einer Benutzerschnitte für eine Mensch - Computer Interaktion zwischen einem Nutzer und dem Endgerät nach der Lehre von Anspruch 15.

Der Erfindung liegt der Gedanke zugrunde, dass eine allgemeine, deklarativ beschriebe Beschreibung der Mensch - Computer Interaktion codiert wird, die auch mögliche multimodalen Aspekte der Mensch - Computer Interaktion umfasst. Diese Codierung wird unter Beachtung der spezifischen multimodalen Fähigkeiten eines Endgerätes mittels informationstechnologischen Methoden auf eine endgerätespezifische Codierung abgebildet.

Die Erfindung bring den Vorteil mit sich, dass eine adaptierbare, automatisch generierte multimodale Benutzerschnittstelle für eine Mensch - Computer Interaktion bereitgestellt wird. Die Mensch - Computer Interaktion wird somit automatisch besonders benutzerfreundlich gestaltet.

Ein weiterer Vorteil der Erfindung besteht darin, dass ein und dieselbe Codierung der Mensch - Computer Interaktion für eine Vielzahl unterschiedlicher Endgeräte verwendet werden kann. Dies erhöht die Effizienz des Gesamtsystems.

In Bezug auf Modalitäten und Endgeräten wechselnden Umgebungen kann so jeweils ein optimales Ergebnis erzielt werden.

Die Erfindung erlaubt weiter zukunftsweisende flexible Endgeräte zu bauen und Anwendungen hierzu zu entwickeln, die auf sehr unterschiedlichen Endgeräten und unter Berücksichtung unterschiedlicher Umgebungsbedingungen und Modalitäten lauffähig sind.

Vorteilhafte Ausgestaltungen der Erfindung sind den Unteransprüchen zu entnehmen.

Die allgemeine, deklarativ beschriebene Beschreibung basiert vorteilhafterweise auf Beschreibungselemente, die zu erfahrenden Informationen, darzustellenden Informationen und Regel beschreiben, die Beziehungen zwischen den darzustellenden und zu erfahrenden Information spezifizieren. Vorteilhafterweise basiert die allgemeine Beschreibung weiter auf Beschreibungselementen, die Regel beschreiben, die das Verhalten eines Dialoges auf unterschiedliche Modalitäten spezifizieren und Modalitätspräferenzen der Darstellung spezifizieren. Hierdurch wird es möglich, eine Mensch - Computer Interaktion und deren mögliche multimodale Aspekte auf effektive Weise zu beschreiben. Weiter wird die automatische Adaptionsfähigkeit der Benutzerschnittstelle an unterschiedliche Endgeräte erhöht.

Weiter ist es vorteilhaft, dass ein Interpreter aus der allgemeinen, deklarativ beschriebenen Beschreibung ein oder mehrere endgerätespezifische Dialoge gemäß endgerätespezifischen Verhaltens- und Darstellungsregeln erstellt, die in einem endgerätespezifischen Datensatz abgespeichert sind. Dieser endgerätespezifischer Datensatz wird weiter bevorzugt aufgrund des endgerätespezifischen Nutzerverhaltens modifiziert. Dadurch wird eine besonders gute Anpassung der Benutzerschnittstelle an das Endgerät und die Modalität ermöglicht.

Es ist hierbei besonders effektiv, wenn der Interpreter einen Dialog aus Dialogelementen zusammensetzt, die er gemäß der allgemeinen Beschreibung der Mensch - Computer Interaktion und den multimodalen Eingabemöglichkeiten und/ oder Präferenzen des Endgerätes auswählt, modifiziert und verknüpft. Besonders vorteilhaft ist hierbei, wenn der Interpreter Dialogelemente zur Beschreibung des Dialoges verwendet, die aus einem modalitätslosen Funktionskern bestehen, der um modalitätsspezifische Eigenschaften ergänzt wird. Hierdurch wird es möglich, den Aufwand für den Interpreter zu verringern und eine schnelle Erstellung des Dialoges zu gewährleisten. Die Codierung gestaltet sich hierbei besonders einfach, wenn als Dialogelemente Steuerungsobjekte und Darstellungsobjekte verwendet werden.

Im folgenden wird die Erfindung anhand von mehreren Ausführungsbeispielen unter zur Hilfenahme der beiliegenden Zeichnungen beispielhaft erläutert.
- Fig. 1: zeigt ein Blockdiagramm eines erfindungsgemäßen Computersystems mit mehreren erfindungsgemäßen Servern und mehreren erfindungsgemäßen Endgeräten.
- Fig. 2: zeigt eine funktionelle Darstellung des erfindungsgemäßen Computersystems nach Fig. 1.
- Fig. 3: zeigt eine funktionelle Darstellung mit mehreren Steuerungsobjekten und mehreren Darstellungsobjekten.
- Fig. 4a: zeigt eine funktionelle Darstellung eines multimodalen Darstellungsobjekts für ein erstes Ausführungsbeispiel.
- Fig. 4b: zeigt eine funktionelle Darstellung eines multimodalen Darstellungsobjekts für ein zweites Ausführungsbeispiel.
- Fig. 5: zeigt ein Blockschaltbild eines Ausschnitts aus dem Computersystem nach Fig. 1 für ein erstes Ausführungsbeispiel.
- Fig. 6: zeigt ein Blockschaltbild eines Ausschnitts aus dem Computersystem nach Fig. 1 für ein zweites Ausführungsbeispiel.

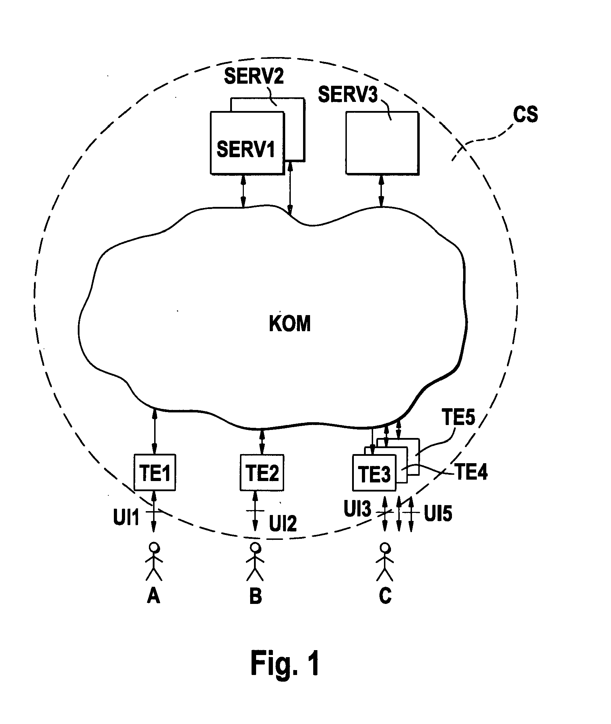

Fig. 1 zeigt ein Computersystem CS mit mehreren Servern SRV1 bis SRV3, mit einem Kommunikationsmedium KOM, und mit mehreren Endgeräten TE1 bis TE5. Die Server SRV1 bis SRV3 kommunizieren über das Kommunikationsmedium KOM mit den Endgeräten TE1 bis TE5. Die Endgeräte TE1 bis TE5 kommunizieren über jeweilige Benutzerschnittstellen UI1 bis UI5 mit Nutzern A, B bzw. C.

Die Server SRV1 bis SRV3 bestehen jeweils aus einem oder aus mehreren Rechnern, aus einer auf dieser Hardware aufsetzender Software-Plattform und aus auf der Software-Plattform aufsetzenden Applikationsprogrammen, die die Funktionen der Server SRV1 bis SRV3 steuern.

Bei den Endgeräten TE1 bis TE5 handelt es sich um Computer oder Telekommunikations-Endgeräte. Beispielsweise handelt es sich bei den Endgeräten TE1 und TE2 um ein GSM-Endgerät (GSM = Global System for Mobil Communication) bzw. um ein UMTS-Endgerät (UMTS = Universal Mobile Communication). Die Endgeräte TE1 und TE2 sind den Nutzern A bzw. B zugeordnet. Die Endgeräte TE3 bis TE5 sind dem Nutzer C zugeordnet. Bei dem Endgerät TE3 handelt es sich beispielsweise um einen Computer. Dieser Computer kann hierbei auch die Funktion eines Clients in Bezug zu einem der Server SRV1 bis SRV3 einnehmen. Bei dem Endgerät TE4 handelt es sich um einen mobilen Computer. Bei dem Endgerät TE5 handelt es sich um ein UMTS-Endgerät.

Das Kommunikationsmedium KOM stellt einen Kommunikationsdienst zur Kommunikation zwischen den Servern SRV1 bis SRV3 und den Endgeräten TE1 bis TE5 bereit. Bei dem Kommunikationsmedium KOM handelt es sich beispielsweise um ein Datennetz. Ein solches Datennetz verwendet vorzugsweise ein IP Protokoll (IP = Internet Protocol) als Schicht 3 Kommunikationsprotokoll. Insgesamt ist die Verwendung des TCP/IP-Protokoll Stacks vorteilhaft (TCP = Transmission Control Protocol). Als Transportnetze werden ein oder mehrere LAN-Netze (LAN = Local Area Network), beispielsweise Ethernet-Netze, und/ oder Backbone-Netze, beispielsweise ATM-Netze (ATM = Asynchrone Transfer Mode), verwendet. Es ist jedoch auch möglich, dass als Kommunikationsmedium KOM andere Telekommunikationsnetze verwendet werden. Beispielsweise können hierfür ISDN-Netze (ISDN = Integrated Services Digital Network), PSTN-Netze (PSTN = Public Switched Telecommunication Network), Mobilfunk-Netze, beispielsweise GSM-Netze, UMTS-Netze, DECT-Netze (DECT = Digital European Cordless Telecommunication), Wireless-LAN-Netze oder Netze mit einer Bluetooth-Schnittstelle verwendet werden. Es ist weiter möglich, dass es sich bei dem Kommunikationsmedium KOM um einen Interprozess-Kommunikationsdienst oder um einen Software-Bus, beispielsweise gemäß der Corba-Architektur (Corba =Common Object Request Broker Architecture) handelt.

Es ist auch möglich, dass Daten zwischen den Server SRV1 bis SRV3 und den Endgeräten TE1 bis TE5 mittels eines Speichermediums ausgetauscht werden. So können Daten von dem Server SRV1 auf ein Speichermedium, beispielsweise auf eine CD-ROM abgespeichert werden, das Speichermedium physikalisch zu dem Endgerät TE3 transportiert werden und die Daten von dem Speichermedium in das Endgerät TE3 eingelesen werden.

Die Endgeräte TE1 bis TE5 stellen jeweils eine Benutzerschnittstelle für eine Mensch - Computer Interaktion zwischen dem jeweiligen Nutzer A, B und C und dem jeweiligen zugeordneten Endgerät bereit. So stellt das Endgerät TE1 eine Benutzerschnittstelle UI1 zu dem Nutzer A, das Endgerät TE2 eine Benutzerschnittstelle UI2 zu dem Nutzer B und die Endgeräte TE3 bis TE5 eine Benutzerschnittstelle UI3, UI4 bzw. UI5 zu dem Nutzer C bereit. Die Benutzerschnittstellen UI1 bis UI5 ermöglichen es den Nutzern A, B und C mit dem Computersystem CS oder Komponenten des Computersystems CS zu interagieren und beispielsweise Steuerbefehle an das Computersystem CS oder Elemente des Computersystems CS zu richten und/ oder Informationen von diesem oder diesen zu empfangen.

In dem Computersystem CS ist eine allgemeine, deklarativ beschriebene Beschreibung der Mensch - Computer Interaktion codiert in einer ersten Beschreibungssprache abgespeichert. Es ist hierbei möglich, dass diese allgemeine Beschreibung in einem der Server SRV1 bis SRV3 oder in einem oder in mehreren der Endgeräte TE1 bis TE5 abgespeichert ist.

Das Computersystem CS verfügt weiter über einen oder mehrere Interpreter. Dieser oder diese können in den Servern SRV1 bis SRV3 oder den Endgeräten TE1 bis TE5 angeordnet sein. Der Interpreter greift auf die abgespeicherte allgemeine Beschreibung und auf einen oder auf mehrere endgerätespezifische Datensätze zu, die die multimodalen Eingabemöglichkeiten und/ oder Präferenzen eines oder mehrere der Endgeräte TE1 bis TE5 beschreiben. Ein solcher endgerätespezifischer Datensatz kann hierbei entweder in dem jeweiligen zugeordneten Endgerät abgespeichert sein oder in einem oder mehreren der Server SRV1 bis SRV3 abgespeichert sein.

Zur Bereitstellung der Benutzerschnittstelle UI1 greift ein Interpreter auf die allgemeine, deklarativ beschriebene Beschreibung der Mensch - Computer Interaktion zu. Zusätzlich greift er auf einen endgerätespezifischen Datensatz zu, der die multimodalen Eingabemöglichkeiten und/ oder Präferenzen des Endgerätes TE1 beschreibt. Gemäß der allgemeinen Beschreibung der Mensch - Computer Interaktion und den multimodalen Eingabemöglichkeiten und/ oder Präferenzen des Endgerätes TE1, die er dem endgerätespezifischen Datensatz entnimmt, erstellt der Interpreter sodann mindestens einen endgerätespezifischen Dialog codiert in einer zweiten Beschreibungssprache. Der so erstellte mindestens eine Dialog wird sodann von einer Steuereinheit abgearbeitet.

Es ist hierbei möglich, dass die Steuereinheit in dem Endgerät TE1 oder in einem der Server SRV1 bis SRV3 angeordnet ist. Weiter ist es vorteilhaft, dass für jedes der Endgeräte TE1 bis TE5 in dem Computersystem CS ein endgerätespezifischer Datensatz abgespeichert ist, der die multimodalen Eingabemöglichkeiten und/ oder Präferenzen der Endgeräte TE1, TE2, TE3, TE4 bzw. TE5 beschreibt.

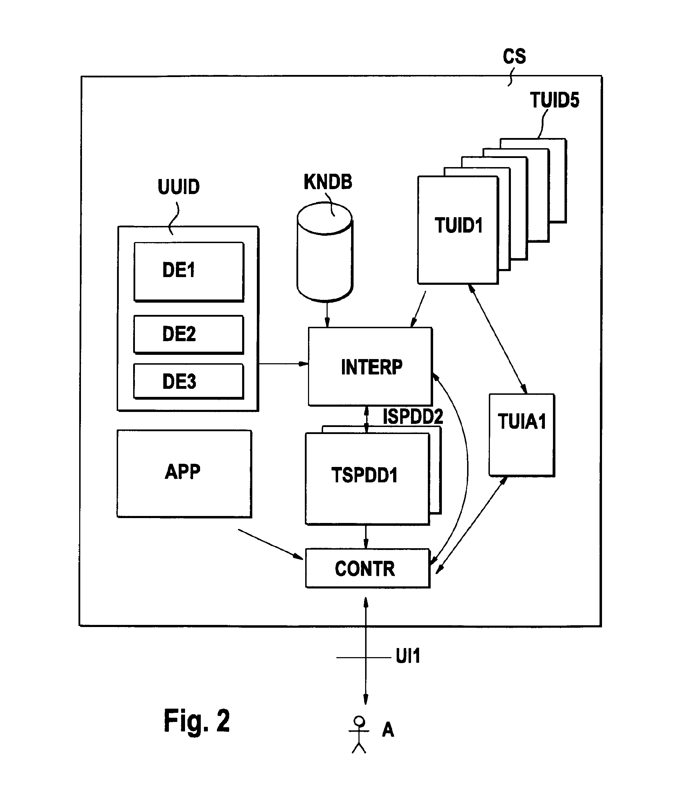

Im Folgenden wird die detaillierte Funktionsweise des erfindungsgemäßen Verfahrens anhand von Fig. 2 beschrieben.

Fig. 2 zeigt das Computersystem CS und den Nutzer A. Das Computersystem CS stellt die Benutzerschnittstelle UI1 für eine Mensch - Computer Interaktion zwischen dem Nutzer A und dem Endgerät TE1 bereit.

Eine Mensch - Computer Interaktion stellt einen Austausch von Informationen zwischen einem Mensch und einem Computer dar.

Das Computersystem CS weist mehrere Datensätze UUID, KNDB, TUID1 bis TUID5, und TSPDD1 bis TSPDD2 auf. Weiter weist das Computersystem CS einen Interpreter INTERP, zwei Steuereinheiten CONTR und TUIA1 und ein Applikationsprogramm APP auf.

Die Datensätze UUID, KNDB, TUID1 bis TUID5 und TSPDD1 bis TSPDD2 sind in ein oder mehreren Speichereinheiten des Computersystems CS gespeichert oder zwischengespeichert. Der Interpreter INTERP und die Steuereinheit TUIA1 werden jeweils von einem Applikationsprogramm gebildet, das auf einem der Hardware-Komponenten des Computersystems CS abläuft. Die Steuereinheit CONTR interpretiert die Datensätze TSPDD1 und TSPDD2. Sie kann softwaremäßig als Applikationsprogramm implementiert werden, das auf einer der Hardware-Komponenten des Computersystems CS abläuft. Weiter ist auch eine hardwaremäßig Implementierung der Steuereinheit CONTR möglich.

Der Datensatz UUID besteht aus Daten, die eine allgemeine, deklarativ beschriebene Beschreibung einer Mensch - Computer Interaktion codiert in einer ersten Beschreibungssprache beinhalten. Deklarativ bedeutet in diesem Zusammenhang, dass die Beschreibung der Mensch - Computer Interaktion nicht Mensch - Computer Dialoge fest beschreibt, sondern lediglich Fakten und Regeln vorgibt, denen die Dialoge der Mensch - Computer Interaktion zu folgen haben. Beispielsweise schreibt die Beschreibung nicht eine bestimmte Schriftgröße für eine Überschrift vor, sondern sie schreibt vor, dass die Überschrift größer als der nachfolgende Text zu sein hat.

Als Beschreibungssprache zur Codierung der Beschreibung der Mensch - Computer Interaktion kann eine Programmiersprache, beispielsweise C oder Java verwendet werden. Es ist jedoch auch möglich, dass Beschreibungssprachen wie XML (Extended Markup Language) oder ASN. 1 (Abstract Syntaxes Notation 1) verwendet werden.

Die in dem Datensatz UUID beinhaltete Beschreibung einer Mensch - Computer Interaktion beschreibt deklarativ ein oder mehrere Interaktionen zwischen dem auf dem Computersystem ablaufendem Applikationsprogramm APP und einem menschlichen Nutzer. Es ist jedoch auch möglich, dass die in dem Datensatz beinhaltete deklarative Beschreibung neben der Beschreibung der Benutzerschnittstelle, also der Mensch - Computer Interaktion, auch Anweisungen zur Verarbeitung gewonnener Informationen umfasst. Die Trennung zwischen der Beschreibung der Mensch - Computer Interaktion einerseits und der Applikation andererseits ist jedoch vorteilhaft, da dadurch die Programmstruktur übersichtlicher wird.

Die in dem Datensatz UUID beinhaltete allgemeine deklarative Beschreibung setzt sich aus unterschiedlichen Beschreibungselementen zusammen.

Ein erster Teil DE1 der Beschreibung enthält Beschreibungselemente, die zu erfahrende Informationen, darzustellende Informationen und Regel beschreiben, die Beziehungen zwischen den darzustellenden und zu erfahrenden Informationen spezifizieren. Zu erfahrende Informationen werden beispielsweise durch die Angabe der Bezeichnung und des Datentyps, beispielsweise "Name/String/20 Zeichen", beschrieben. Darzustellende Informationen werden beispielsweise durch die Angabe der Bezeichnung der Informationsart, z.B. Text, Tabelle, Grafikdiagramm, und der Datenquelle beschrieben. Beziehungen zwischen den zu erfahrenden und den darzustellenden Informationen sind beispielsweise Zusammengehörigkeit (Gruppierung), Dringlichkeit der Darstellung, oder Beziehung zu anderen Beschreibungselementen, wie "unterstützt", "ersetzt" oder "ergänzt".

Ein zweiter Teil DE2 der Beschreibung enthält Beschreibungselemente, die Regeln beschreiben, die das Verhalten der Mensch - Computer Interaktion auf unterschiedliche Modalitäten spezifizieren. Diese Regeln ergänzen im Computersystem CS gespeicherte allgemeinen Regeln um in bezug auf die spezifische Mensch - Computer Interaktion spezifische Regeln.

Ein dritter Teil DE3 der Beschreibung enthält Beschreibungselemente, die Regel beschreiben, die Modalitäts-Präferenzen der Darstellung von Informationen für die in dem Datensatz UUID spezifizierte Mensch - Computer Interaktion beschreiben.

Bereits mittels der Beschreibungselemente des Teils DE1 kann die Mensch - Computer Interaktion deklarativ beschrieben werden. Eine Verwendung von Beschreibungselementen der Teile DE2 und DE3 ist somit nicht notwendig. Es ist vorteilhaft, dass mit den Beschreibungselementen des Teils DE1 noch keine Festlegungen dahingehend getroffen wird, mittels welcher Modalität Informationen dargestellt oder erfahren werden. Präferenzen und Regeln in bezug auf das Modalitätsverhalten der Mensch - Computer Interaktion werden mittels Beschreibungselementen der Teile DE2 und DE3 beschrieben.

Der Datensatz KNDB beinhaltet allgemeine Verhaltens- und Darstellungsregeln für Dialoge. Die in dem Datensatz KNDB enthaltenen Regeln stellen eine allgemeine Wissensbasis dar, die Verhaltens- und Darstellungsregeln für Dialoge umfasst, die allgemeine Gültigkeit für eine Vielzahl von Mensch - Computer Interaktionen haben. Es ist hierbei denkbar, dass das Computersystem CS die allgemeinen Regeln aufgrund von Erfahrungen im Lauf der Zeit modifiziert oder ergänzt und dadurch einen "Lerneffekt" erzielt.

Die Datensätze TUID1 bis TUID5 stellen endgerätespezifische Datensätze dar, die den Endgeräten TE1, TE2, TE3, TE4 bzw. TE5 zugeordnet sind. Sie beschreiben jeweils die multimodalen Eingabemöglichkeiten und/ oder Präferenzen des jeweiligen Endgerätes, dem sie zugeordnet sind. Weiter ist es möglich, dass die endgerätespezifischen Datensätze TUID1 bis TUID5 endgerätespezifische Verhaltens- und Darstellungsregeln für Dialoge enthalten. Der Datensatz TUID1 beschreibt beispielsweise, mittels welcher Modalitäten ein Nutzer Informationen von dem Endgerät TE1 empfangen kann und mittels welcher Modalitäten ein Nutzer Informationen in das Endgerät TE1 eingeben kann. Weiter beschreibt er, welche Modalitäten für die Ein- und / oder Ausgabe abhängig von welchen Bedingungen zu präferieren sind.

Der Interpreter INTERP läuft auf der Hardware des Computersystems CS ab und führt die in dem Datensatz UUID codierte, allgemeine Beschreibung der Mensch - Computer Interaktion aus. Hierfür greift der Interpreter INTERP auf den Datensatz UUID mit der allgemeinen Beschreibung und auf einen der endgerätespezifischen Datensätze TUID1 bis TUID5 zu. Der Interpreter INTERP bestimmt, für welches der Endgeräte TE1 bis TE5 eine Benutzerschnittstelle für die Mensch - Computer Interaktion bereitgestellt werden soll und greift auf denjenigen der endgerätespezifischen Datensätzen TUID1 bis TUID5 zu, der diesem Endgerät zugeordnet ist. Zur Bereitstellung der Benutzerschnittstelle UI1 greift der Interpreter INTERP so auf den Datensatz TUID1 zu.

Beim Zugriff auf die Datensätze UUID und TUID1 liest der Interpreter INTERP Daten aus diesen Datensätzen aus. Weiter greift der Interpreter INTERP auf den Datensatz KNDB zu und liest Daten aus diesem Datensatz aus. Aufgrund der so dem Interpreter zur Verfügung stehenden Daten erstellt der Interpreter sodann mindestens einen endgerätespezifischen Dialog codiert in einer zweiten Beschreibungssprache.

Die erste und die zweite Beschreibungssprache können übereinstimmen. Es ist jedoch vorteilhaft, daß als erste und zweite Beschreibungssprachen unterschiedliche Beschreibungssprachen verwendet werden. Für die zweite Beschreibungssprache kommen prinzipiell ebenfalls die in bezug auf die erste Beschreibungssprache genannten Beschreibungssprachen in Frage.

Es ist möglich, daß innerhalb des Computersystems CS mehrere verschiedene Steuereinheiten CONTR vorgesehen sind, die jeweils unterschiedlichen Endgeräten zugeordnet sind. Hierbei ist es vorteilhaft, wenn von dem Interpreter INTERP als zweite Beschreibungssprache eine an die jeweils adressierte Steuereinheit CONTR angepasste Beschreibungssprache gewählt wird.

Die Datensätze TSPDD1 und TSPDD2 werden von dem Interpreter INTERP generiert und beschreiben jeweils einen oder mehrere endgerätespezifische Dialoge. Die in den Datensätzen TSPDD1 und TSPDD2 beinhalteten Dialoge werden sodann von der Steuereinheit CONTR abgearbeitet.

Damit erfolgt die Abarbeitung der in dem Datensatz UUID enthaltenen allgemeinen Beschreibung in zwei Schritten: Der Dialogerstellung, die von dem Interpreter INTERP durchgeführt wird, und der Dialogverarbeitung, die von der Steuereinheit CONTR durchgeführt wird.

Hierbei ist es möglich, dass von dem Interpreter INTERP jeweils nur ein Teil der in dem Datensatz UUID beinhalteten allgemeinen Beschreibung abgearbeitet wird und hieraus ein oder einige wenige Dialoge erstellt werden, die anschließend von der Steuereinheit CONTR abgearbeitet werden. Die weitere Abarbeitung der in dem Datensatz UUID beinhalteten allgemeinen Beschreibung erfolgt sodann erst nach Abarbeitung dieser Dialoge und basierend auf dem Ergebnis der abgearbeiteten Dialoge. Diese Ergebnisse gehen somit in die Erstellung des oder der weiteren Dialoge durch den Interpreter INTERP ein. Dialogerstellung und Dialogverarbeitung wechseln sich somit sukzessive ab.

Es ist auch möglich, dass der Interpreter INTERP die gesamte in dem Datensatz UUID beinhaltete allgemeine Beschreibung abarbeitet und alle Dialoge am Stück erstellt. Der Datensatz TSPDD1 beinhaltet damit sämtliche von der Steuereinheit CONTR1 abzuarbeitenden Dialoge.

Der Interpreter INTERP erstellt ein oder mehrere endgerätespezifische Dialoge basierend auf Beschreibungselementen der allgemeinen Beschreibung, die in dem Datensatz UUID enthalten sind, basierend auf den allgemeinen Verhaltens- und Darstellungsregeln für Dialoge, die in dem Datensatz KNDB enthalten sind, und basierend auf den in dem Datensatz TUID1 beschriebenen multimodalen Eingabemöglichkeiten und / oder Präferenzen des Endgerätes TE1. Gemäß den in den Beschreibungselementen angegebenen zu erfahrenden Informationen, darzustellenden Informationen und unter Anwendung der in den Beschreibungselementen sowie den Datensätzen KNDB und TUID1 spezifizierten Regeln erstellt der Interpreter INTERP ein oder mehrere endgerätespezifische Dialoge.

Es ist hierbei vorteilhaft, dass der Interpreter den Dialog oder die Dialoge aus Dialogelementen zusammensetzt, die er gemäß der allgemein Beschreibung der Mensch - Computer Interaktion und den multimodalen Eingabemöglichkeiten und/ oder Präferenzen des Endgerätes auswählt, modifiziert und verknüpft. Solche Dialogelemente können beispielsweise als Objekte codiert werden. Damit enthalten die Datensätze TSPDD1 und TSPDD2 eine objektorientierte Darstellung von ein oder mehreren Dialogen. Es ist jedoch auch möglich, dass der Interpreter als Beschreibungssprache für die Codierung der Dialoge nicht auf eine objektorientierte Beschreibungssprache zurückgreift und den oder die Dialoge nicht objektorientiert erstellt.

Es ist vorteilhaft, dass der Interpreter Dialogelemente zur Beschreibung des Dialoges verwendet, die einen logischen Wert besitzen, der durch Regeln bestimmt wird und in Regeln verwendet werden kann. Hierdurch ist es möglich, die Dialogbeschreibung dynamisch zu gestalten. Weiter ist es vorteilhaft, wenn der Interpreter INTERP Dialogelemente zur Beschreibung von Dialogen verwendet, die aus einem modalitätslosen Funktionskern bestehen, der um modalitätsspezifische Eigenschaften ergänzt werden kann.

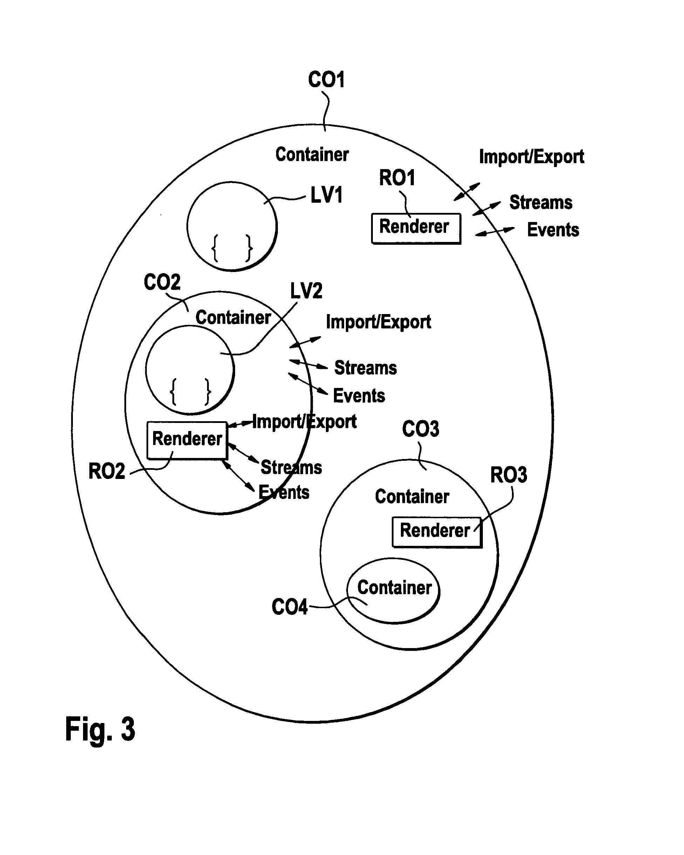

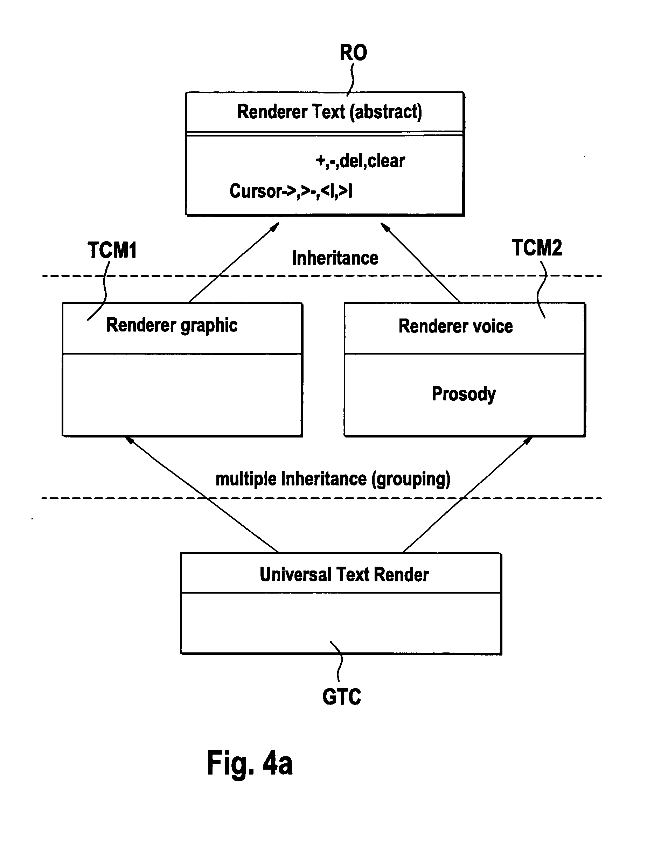

Anhand von Fig. 3 und Fig. 4a wird nun die Funktionsweise einer möglichen Ausführungsform des Interpreters INTERP erläutert, bei der der Interpreter INTERP Dialogelemente zur Beschreibung von Dialogen verwendet, die von Steuerungsobjekten und Darstellungsobjekten gebildet werden.

Fig. 3 zeigt den prinzipiellen Aufbau eines von dem Interpreter INTERP erstellten Dialoges, wie er codiert in einer zweiten Beschreibungssprache in dem von dem Interpreter INTERP generierten Datensatz TSPDD1 beinhaltet sein kann. Der Dialog wird mittels Dialogelemente beschrieben, von denen in Fig. 3 beispielhaft mehrere Dialogelemente CO1 bis CO4 und RO1 bis RO3 gezeigt sind.

Die Dialogelemente CO1 bis CO4 werden von Steuerungsobjekten gebildet. Steuerungsobjekte sind Objekte, welche andere Objekte in sich enthalten und verwalten und über keine physikalische Darstellung verfügen müssen.

Die Dialogelemente RO1 bis RO3 werden von Darstellungsobjekten gebildet. Darstellungsobjekte sind Objekte, die Informationen mittels einer Modalität darstellen oder empfangen und eine Darstellung in mindestens einer Modalität besitzen.

Wie in Fig. 3 dargestellt, können Steuerungsobjekte andere Steuerungsobjekte und Darstellungsobjekte enthalten und verwalten. So enthält beispielsweise das Dialogelement CO1 die Dialogelemente RO1, CO2 und CO3. Weiter enthält das Dialogelement CO2 das Dialogelement RO2 und das Dialogelement CO3 die Dialogelemente CO4 und RO3.

Dialogelemente, also Darstellungsobjekte und Steuerungsobjekte, besitzen einen logischen Wert, welcher durch Regeln bestimmt wird. Der logische Wert eines Dialogelementes kann selbst in Regeln verwendet werden. Der logische Wert eines Dialogelements wird erst in der Darstellungsphase aufgrund der Korrelation von Regeln, Präferenzen und Eigenschaften festgelegt. In Fig. 3 sind beispielhaft zwei Variablen LV1 und LV2 dargestellt, die logische Werte der Dialogelemente CO1 bzw. CO2 enthalten.

Steuerungsobjekte und Darstellungsobjekte verfügen jeweils über eine Schnittstelle, über die Variablen importiert / exportiert werden können. Weiter können über diese Schnittstelle Ereignisse (events) und Datenströme (streams) ausgetauscht werden. In Fig. 3 ist dies beispielhaft für die Dialogelemente CO1, CO2 und RO2 gezeigt.

Multimodal Dialogelemente werden nach dem Prinzip aufgebaut, dass sie jeweils über einen modalitätslosen Funktionskern verfügen, der um jeweilige modalitätsspezifische Eigenschaften ergänzt wird. Dies ist in Fig. 4a gezeigt.

Fig. 4a zeigt beispielhaft die Instantiierung eines Darstellungsobjektes RO. Ein modalitätsloser Funktionskern GTC wird von dem Interpreter INTERP um modalitätsspezifische Eigenschaften TCM1 und TCM2 ergänzt und so das Darstellungsobjekt RO gebildet. Der modalitätslose Funktionskern GTC wird von einer bestimmten Objektklasse, hier der Objektklasse "Universal Text Render" gebildet. Diese Objektkasse enthält keine modalitätsspezifischen Funktionen. Die modalitätsspezifischen Eigenschaften TCM1 und TCM2 sind ihrerseits in spezifischen Objektklassen enthalten. So enthält beispielsweise eine Objektklasse "Renderer voice" modalitätsspezifische Funktionen für die Modalität "Sprache". Die Objektklasse "Renderer graphic" enthält modalitätsspezifische Funktionen für die Modalität "graphische Darstellung". Die modalitätsspezifischen Eigenschaften TCM1 und TCM2 werden durch die Instantiierung der Objektklassen "Renderer voice" und "Renderer graphic" gebildet. Hierbei sind die Objektklassen "Renderer voice" und "Renderer graphic" durch Vererbungen mit der Objektklasse "Universal Text Render" verknüpft. Dies bedeutet, dass die Objektklassen "Renderer voice" und "Renderer graphic" Funktionen der Objektklasse "Universal Text Renderer" enthalten können.

Zur Erzeugung des Darstellungsobjektes RO instantiiert der Interpreter INTERP die Objektklassen "Universal Text Renderer", "Renderer voice" und "Renderer graphic" gemäß den in der allgemeinen Beschreibung, dem Datensatz KNDB und dem Datensatz TUID1 enthaltenen Informationen und Regeln.

Zur Dialogerstellung führt der Interpreter INTERP somit folgende Schritte aus:

Der Interpreter INTERP erzeugt zuerst das erste Steuerungsobjekt. Unter Verwendung der in dem Datensatz TUID1 beinhalteten multimodalen Eigenschaften (Ein- und Ausgabemöglichkeiten) und/ oder Präferenzen des Endgerätes TE1, der in dem Datensatz UUID beinhalteten Regeln und den in dem Datensatz KNDB beinhalteten Regeln versucht er sodann, den in den Beschreibungselementen der allgemeinen Beschreibung spezifizierten zu erfahrenden und auszugebenden Informationen Darstellungsobjekte zuzuordnen und diese an das Steuerungsobjekt zu binden. Ist das nicht möglich, weil die Darstellung beispielsweise wegen zu kleiner Bildschirmgröße oder mangelnder Prozessorkapazität nicht erfolgen kann oder weil die Regeln eine bestimmte Gruppierung der Information vorgeben, werden weitere Steuerungsobjekte erzeugt oder andere Modalitäten gewählt. Sodann wird der Prozess der Bindung der Darstellungsobjekte an die Steuerungsobjekte wiederholt. Bei der Suche nach der optimalen Lösung wird mittels eines Rückverfolgungs-Verfahrens (backtracking) vorgegangen. Neben der Auswahl und Verknüpfung der Steuerungsobjekte und Darstellungsobjekte werde diese von dem Interpreter INTERP jeweils gemäß der in den Datensätzen UUID, KNDB und TUID1 enthaltenen Informationen und Regeln modifiziert. Wie bereits oben dargestellt, können die Steuerungsobjekte und Darstellungsobjekte hierbei selbst Regeln enthalten, die von dem Interpreter bei der Erstellung des Dialoges festgelegt werden. Solche Regeln können Signale auslösen, welche zur Ausführung anderer Regeln oder externer Prozeduren führen. Solchen Regeln können weiter Ereignisse (events) zugeordnet werden, welche die Ausführung dieser Regeln auslösen. Hierbei ist es vorteilhaft, das bei der Erstellung eines Dialoges Regeln aus der diesem Dialog zugeordneten allgemeinen Beschreibung und aus der globalen Wissensbasis, die der Datensatz KNDB beinhaltet, verwendet werden.

Die derart von dem Interpreter INTERP durch die Auswahl, die Modifizierung und Verknüpfung von Steuerungsobjekten und Darstellungsobjekten generierte Beschreibung des Dialoges wird von dem Interpreter INTERP codiert in einer zweiten Beschreibungssprache in dem Datensatz TSPDD1 abgespeichert.

Hat der Interpreter den gesamten Dialog erstellt, wird dieser von der Steuereinheit CONTR abgearbeitet, in dem die zu gewinnenden Informationen von dem Benutzer erfahren werden und/ oder der Dialog seitens des Benutzers oder des Systems abgebrochen wird. Hierbei kommen auch die in dem Dialog codierten Regeln zum Einsatz, welche die Interaktion mit dem Benutzer steuern.

Die Steuereinheit TUIA1 von Fig. 2 modifiziert die endgerätespezifischen Datensätze TUID1 bis TUID5 aufgrund des endgerätespezifischen oder teilnehmerspezifischen Nutzerverhaltens. Die Steuereinheit TUIA1 überwacht hierzu das Nutzerverhalten der Nutzer der Endgeräte TE1 bis TE5. Aus dem jeweiligen endgerätespezifischen Nutzerverhalten ermittelt die Steuereinheit TUIA1 Präferenzen der Nutzer dieser Endgeräte. Stimmen die so ermittelten Präferenzen mit den in den Datensätzen TUID1 bis TUID5 codierten Präferenzen der Endgeräte TE1 bis TE5 nicht überein, so werden die in den Datensätzen TUID1 bis TUID5 codierten Präferenzen entsprechend den ermittelten Präferenzen abgeändert.

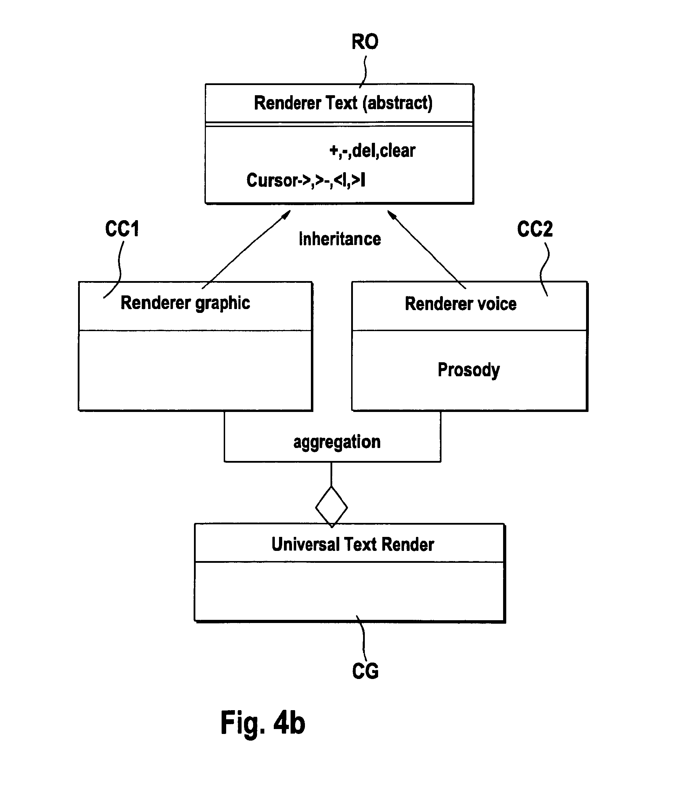

Fig. 4b zeigt beispielhaft eine weitere Möglichkeit der Instantiierung des Darstellungsobjektes RO durch den Interpreter INTERP.

Fig. 4b zeigt das Darstellungsobjekt RO und drei Objektklassen CG, CC1 und CC2.

Die Objektklasse CG enthält neben den Funktionen und Daten des modalitätslose Funktionskerns auch sämtliche modalitätsspezifischen Funktionen. Die Objektklasse CC1 enthält neben den Funktionen und Daten des modalitätslose Funktionskerns die modalitätsspezifische Funktionen für die Modalität "Sprache". Die Objektklasse CC2 enthält neben den Funktionen und Daten des modalitätslose Funktionskerns die modalitätsspezifische Funktionen für die Modalität "graphische Darstellung". Die Objektklasse CG stellt somit eine Über-Klasse dar, die die Funktionen und Daten der Objektklassen CC1 und CC2 mit umfasst.

Zur Erzeugung des Darstellungsobjektes RO instantiiert der Interpreter INTERP eine der Objektklassen CC1, CC2 oder CG gemäß den in der allgemeinen Beschreibung, dem Datensatz KNDB und dem Datensatz TUID1 enthaltenen Informationen und Regeln.

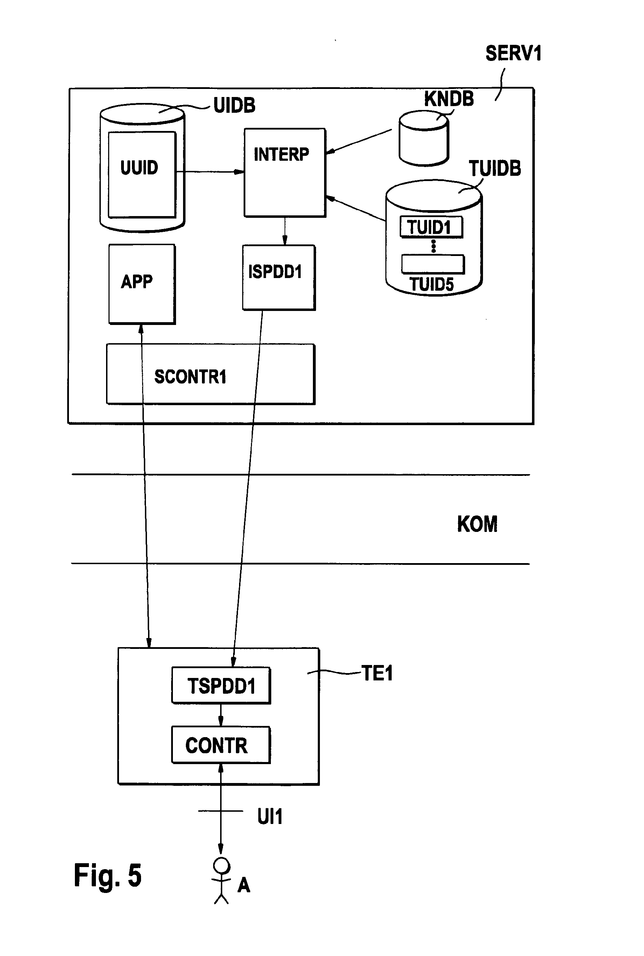

Anhand von Fig. 5 wird nun der Aufbau eines erfindungsgemäßen Servers beispielhaft verdeutlicht.

Fig. 5 zeigt den Server SERV1, das Kommunikationsmedium KOM, das Endgerät TE1 und den Nutzer A, der über die Benutzerschnittstelle UI1 mit dem Endgerät TE1 kommuniziert.

Wie bereits oben dargestellt, wird der Server SERV1 von einer aus ein oder mehreren miteinander verbundenen Computern gebildeten Hardware-Plattform, einer auf dieser Hardware-Plattform aufsetzender Software-Plattform und von auf dieser Software-Plattform aufsetzenden Applikationsprogrammen gebildet. Durch die Ausführung von einem oder mehreren dieser Applikationsprogramme auf der Soft- und Hardware-Plattform des Servers SERV1 werden die im folgenden beschriebenen Funktionen des Servers SERV1 erbracht.

Der Server SERV1 erbringt die Funktion eines Internet-, WAP-, und/oder UMTS-Servers (WAP = Wireless Application Protocol), der Endgeräten UMTS-, WAP-, und/oder UMTS-Dienste zur Verfügung stellt. Der Server SERV1 steht vor dem Problem, mit Dienst-Nutzern über eine Vielzahl sehr unterschiedlich ausgestalteter Endgeräte zur Erbringung von Diensten interagieren zu müssen. Zur möglichst optimalen Anpassung der Benutzerschnittstelle zu dem von ihm bereitgestellten Dienst an das jeweils zugreifende Endgerät, generiert der Server SERV1 für jedes zugreifende Endgeräte eine individuell an den angeforderten Dienst und das zugreifende Endgerät angepasste Benutzerschnittstelle.

Aus funktioneller Sicht weist der Server SERV1 hierfür den Interpreter INTERP, die Steuereinheit SCONTR1, das Applikationsprogramm APP, und die Datensätze UUID, KNDB, TSPDD1 sowie TUID1 bis TUID5 auf.

Der Datensatz UUID ist in einer Speichereinheit UIDB abgespeichert. Die Datensätze TUID1 bis TUID5 sind in einer Speichereinheit TUIDB abgespeichert. Bei den Speichereinheiten UIDB und TUIDB handelt es sich um Datenbanken. Es ist hierbei möglich, dass die Datensätze UUID, KNDB und TUID1 bis TUID5 in ein und derselben Datenbank abgespeichert sind.

Die Steuereinheit SCONTR1 steuert die Erbringung eines von dem Server SERV1 bereitgestellten Dienstes. In dem Applikationsprogramm APP ist die Dienstlogik codiert. Der Datensatz UUID enthält die allgemeine, deklarative beschriebene Beschreibung der Mensch - Computer Interaktionen, die für die Interaktion zwischen Dienstnutzer und Dienst bei der Diensterbringung durchgeführt werden soll. Der Datensatz UUID enthält somit die allgemeine Beschreibung der Benutzerschnittstelle zwischen einem Dienst-Nutzer und der in dem Applikationsprogramm APP codierten Dienstlogik.

Die Datensätze UUID, KNDB, TSPDD1 und TUID1 bis TUID5 beinhalten die nach Fig. 2 bis Fig. 4 beschriebenen Informationen. Der Interpreter INTERP erbringt ebenfalls die Funktionen nach Fig. 2 bis Fig. 4.

Das Endgerät TE1 weist die Steuereinheit CONTR und eine Kopie des Datensatzes TSPDD1 auf. Auch die Steuereinheit CONTR erbringt die Funktionen nach Fig. 2 bis Fig. 4.

Die Steuereinheit SCONTR1 steuert die Erbringung des Dienstes, dessen Dienstlogik in dem Anwendungsprogramm APP codiert ist. Wird nun die Erbringung des Dienstes von dem Endgerät TE1 angefordert, so weist die Steuereinheit SCONTR1 den Interpreter INTERP an, einen oder mehrere Dialoge für die Interaktion mit dem Dienstnutzer, hier dem Nutzer A, zu erstellen. Weiter teilt die Steuereinheit SCONTR1 dem Interpreter INTERP mit, von welchem Endgerät der Dienst angefordert worden ist. Der Interpreter INTERP greift nun auf die in der Speichereinheit UIDB gespeicherte allgemeine Beschreibung und auf den dem anfordernden Endgerät zugeordneten endgerätespezifischen Datensatz zu. In diesem Ausführungsbeispiel wird der Dienst von dem Endgerät TE1 angefordert und der Interpreter greift somit auf den Datensatz UUID und den Datensatz TUID1 zu, der die multimodalen Eingabemöglichkeiten und/ oder Präferenzen des Endgerätes TE1 beschreibt. Gemäß der in dem Datensatz UUID beinhalteten allgemeinen Beschreibung einer Mensch - Computer Interaktion und den in dem Datensatz TUID1 beinhalteten multimodalen Eingabemöglichkeiten und/ oder Präferenzen des Endgerätes TE1 erstellt der Interpreter sodann mindestens einen endgerätespezifischen Dialog codiert in einer zweiten Beschreibungssprache. Wie in den Ausführungsbeispielen nach Fig. 2 bis Fig. 4 beschrieben, erstellt der Interpreter so den Datensatz TSPDD1, der einen solchen Dialog beinhaltet. Der von dem Interpreter INTERP erstellte Datensatz TSPDD1 wird nun von der Steuereinheit SCONTR1 an das Endgerät TE1 übermittelt und dort abgespeichert.

Die Steuereinheit CONTR arbeitet nun den oder die in dem Datensatz TSPDD1 beinhalteten Dialoge ab. Das oder die Ergebnisse dieser Abarbeitung werden von der Steuereinheit CONTR an die Steuereinheit SCONTR1 übermittelt, die die Ergebnisse gemäß der in dem Applikationsprogramm APP beinhalteten Dienstelogik auswertet.

Wie bereits oben dargelegt, kann der Interpreter INTERP hierbei die Dialoge für die Mensch - Computer Interaktion sukzessive unter Auswertung der von der Steuereinheit CONTR empfangenen Informationen erstellen. Es ist jedoch auch möglich, dass der Interpreter INTERP die gesamten Dialoge für die Mensch - Computer Interaktion erstellt und die Steuereinheit SCONTR1 einen Datensatz an das Endgerät TE1 sendet, der alle notwendigen endgerätespezifischen Dialoge codiert in der zweiten Beschreibungssprache enthält. Weiter ist es möglich, dass das Anwendungsprogramm APP, wie oben beschrieben, nicht von der in dem Datensatz UUID enthaltenen allgemeinen Beschreibung der Mensch - Computer Interaktion separiert ist.

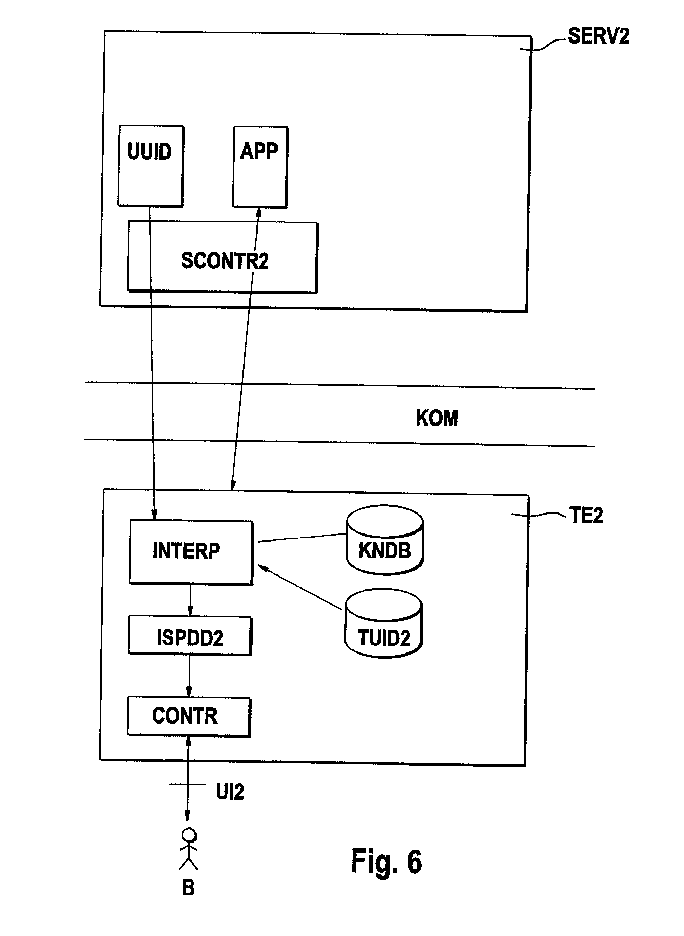

Anhand von Fig. 6 wird nun ein weiteres Ausführungsbeispiel der Erfindung erläutert.

Fig. 6 zeigt den Server SERV2, das Kommunikationsmedium KOM, das Endgerät TE2 und den Nutzer B, der mit dem Endgerät TE2 über eine Benutzerschnittstelle UI2 kommuniziert.

Der Server SERV2 ist wie der Server SERV1 nach Fig. 5 aufgebaut, mit dem Unterschied, dass der Interpreter INTERP nicht in dem Server SERV2, sondern in dem Endgerät TE2 angeordnet ist. Der Server SERV2 weist somit als funktionswesentliche Elemente lediglich eine Speichereinheit mit dem Datensatz UUID und dem Applikationsprogramm APP sowie die Steuereinheit SCONTR2 auf.

Auf eine Dienst-Anforderung von dem Endgerät TE2, die von dem Server SERV2 die Bereitstellung eines Dienstes anfordert, dessen Dienstelogik in dem Applikationsprogramm APP codiert ist, sendet die Steuereinheit SCONTR2 den Datensatz UUID an das Endgerät TE2. Die Ergebnisse der von dem Endgerät TE2 durchgeführten Mensch - Computer Interaktion werden von dem Endgerät TE2 an die Steuereinheit SCONTR2 übermittelt, die diese gemäß dem Applikationsprogramm APP zur Bereitstellung des Dienstes auswertet.

Es ist hierbei möglich, dass von der Steuereinheit SCONTR2 sukzessiv mehrere Datensätze, die eine allgemeine, deklarativ beschriebene Beschreibung einer Mensch - Computer Interaktion codiert in einer ersten Beschreibungssprache enthalten, an das Endgerät TE2 übermittelt werden.

Das Endgerät TE2 weist einen Prozessor und eine Speichereinheit sowie periphere Komponenten auf. Diese peripheren Komponenten ermöglichen zum einen die Interaktion des Endgerätes TE2 über das Kommunikationsmedium KOM. Weiter ermöglichen diese peripheren Komponenten dem Endgerät TE2, mit einem Nutzer über ein oder mehrere Modalitäten zu kommunizieren.

In der Speichereinheit des Endgerätes TE2 sind die Datensätze KNDB und TUID2 gespeichert. Es ist weiter vorteilhaft, dass in der Speichereinheit des Endgerätes TE2 auch der von dem Server SERV2 empfangene Datensatz UUID gespeichert wird.

In der Speichereinheit des Endgerätes TE2 ist weiter ein Computerprogramm abgespeichert, das bei seiner Ausführung durch den Prozessor des Endgerätes TE2 die Funktionen des Interpreters INTERP und der Steuereinheit CONTR nach den Fig. 2 bis Fig. 4 erbringt.

Bei Empfang eines Datensatzes, der eine allgemeine, deklarativ beschriebene Beschreibung einer Mensch - Computer Interaktion codiert in einer ersten Beschreibungssprache aufweist, wird diese allgemeine Beschreibung in der Speichereinheit des Endgerätes TE2 abgespeichert. Es wird somit beim Empfang des Datensatzes UUID dieser Datensatz in der Speichereinheit des Endgerätes TE2 abgespeichert. Der Interpreter INTERP greift nun auf diese allgemeine Beschreibung und auf den Datensatz TUID2 zu, der die multimodalen Eingabemöglichkeiten und/ oder Präferenzen des Endgerätes TE2 beschreibt. Gemäß der allgemeinen Beschreibung der Mensch - Computer Interaktion und den multimodalen Eingabemöglichkeiten und/ oder Präferenzen des Endgerätes TE2 erstellt der Interpreter INTERP sodann mindestens einen endgerätespezifischen Dialog codiert in einer zweiten Beschreibungssprache. Gemäß diesem Ausführungsbeispiel erstellt der Interpreter INTERP hierzu den Datensatz TSPDD2, der einen solchen Dialog beinhaltet.

Die Steuereinheit CONTR arbeitet den so erstellten mindestens einen Dialog ab. Es ist hierbei möglich, dass die Funktion der Steuereinheit CONTR mit der Funktion des Interpreters INTERP synchronisiert wird und so auf eine Speicherung des Datensatzes TSPDD2 verzichtet werden kann.

## Patentansprüche

1. Verfahren zur Bereitstellung einer Benutzerschnittstelle (UI1 bis UI5) für eine Mensch - Computer Interaktion zwischen einem Nutzer (A, B, C) und einem Endgerät (TE1 bis TE5),
**dadurch gekennzeichnet, dass** eine allgemeine, deklarativ beschriebene Beschreibung (UUID) der Mensch - Computer Interaktion kodiert in einer ersten Beschreibungssprache abgespeichert wird, dass ein Interpreter (INTERP) auf die abgespeicherte allgemeine Beschreibung (UUID) und auf einen endgerätespezifischen Datensatz (TUID1 bis TUID5) zugreift, der die multi-modalen Eingabemöglichkeiten und/oder Präferenzen des Endgerätes (TE1 bis TE5) beschreibt, und der Interpreter (INTERP) gemäß der allgemeinen Beschreibung (UUID) der Mensch - Computer Interaktion und den multi-modalen Eingabemöglichkeiten und/oder Präferenzen des Endgerätes mindestens einen endgerätespezifischen Dialog (TSPDD1, TSPDD2) kodiert in einer zweiten Beschreibungssprache erstellt, und dass der so erstellte mindestens eine Dialog (TSPDD1) von einer Steuereinheit (CONTR) abgearbeitet wird.

2. Verfahren nach Anspruch 1, **dadurch gekennzeichnet, dass** der Interpreter (INTERP) den Dialog (TSPDD1, TSPDD2) basierend auf Beschreibungselementen (DE1) der allgemeinen Beschreibung (UUID) erstellt, die zu erfahrende Informationen, darzustellende Informationen und Regeln beschreiben, die Beziehungen zwischen den darzustellenden und zu erfahrenden Informationen spezifizieren.

3. Verfahren nach Anspruch 2, **dadurch gekennzeichnet, dass** der Interpreter (INTERP) einen Dialog (TSPDD1, TSPDD2) basierend auf Beschreibungselementen (DE2) der allgemeinen Beschreibung (UUID) erstellt, die Regeln beschreiben, die das Verhalten der Mensch - Computer Interaktion auf unterschiedliche Modalitäten spezifizieren.

4. Verfahren nach Anspruch 2 oder 3, **dadurch gekennzeichnet, dass** der Interpreter (INTERP) den Dialog (TSPDD1, TSPDD2) basierend auf Beschreibungselementen der allgemeinen Beschreibung (UUID) erstellt, die Regeln beschreiben, die Modalitäts-Präferenzen der Darstellung von Informationen spezifizieren.

5. Verfahren nach Anspruch 1, **dadurch gekennzeichnet, dass** der Interpreter (INTERP) zur Erstellung des mindestens einen Dialoges (TSPDD1, TSPDD2) auf einen Datensatz (KNDB) zugreift, der allgemeine Verhaltensund Darstellungsregeln für Dialoge (TSPDD1) spezifiziert, und der Interpreter (INTERP) den mindestens einen Dialog (TSPDD1, TSPDD2) gemäß dieser allgemeinen Verhaltens- und Darstellungsregeln erstellt.

6. Verfahren nach Anspruch 1, **dadurch gekennzeichnet, dass** der endgerätespezifische Datensatz (TUID1 bis TUID5), auf den der Interpreter (INTERP) zur Erstellung des mindestens einen Dialoges (TSPDD1, TSPDD2) zugreift, endgerätespezifische Verhaltens- und Darstellungsregeln für Dialoge spezifiziert und der Interpreter (INTERP) den mindestens einen Dialog (TSPDD1) gemäß dieser endgerätespezifischen Verhaltens- und Darstellungsregeln erstellt.

7. Verfahren nach Anspruch 1, **dadurch gekennzeichnet, dass** der endgerätespezifische Datensatz (TUID1 bis TUID5) aufgrund des endgerätespezifischen Nutzerverhaltens modifiziert wird.

8. Verfahren nach Anspruch 1, **dadurch gekennzeichnet, dass** der Interpreter (INTERP) den mindestens einen Dialog (TSPDD1, TSPDD2) aus Dialogelementen (CO1 bis CO4, RO, RO1 bis RO3) zusammensetzt, die er gemäß der allgemeinen Beschreibung (UUID) der Mensch - Computer Interaktion und den multi-modalen Eingabemöglichkeiten und/oder Präferenzen des Endgerätes auswählt, modifiziert und verknüpft.

9. Verfahren nach Anspruch 1, **dadurch gekennzeichnet, dass** der Interpreter (INTERP) Dialogelementen (CO1 bis CO4, RO, RO1 bis RO3) zur Beschreibung des Dialoges (TSPDD1, TSPDD2) verwendet, die einen logischen Wert (LV1, LV2) besitzen, der durch Regeln bestimmt wird und in Regeln verwendet werden kann.

10. Verfahren nach Anspruch 1, **dadurch gekennzeichnet, dass** der Interpreter (INTERP) Dialogelementen (RO) zur Beschreibung des Dialoges (TSPDD1, TSPDD2) verwendet, die aus einem modalitätslosen Funktionskern (GTC) bestehen, der um modalitätsspezifische Eigenschaften (TCM1, TCM2) ergänzt wird.

11. Verfahren nach Anspruch 1, **dadurch gekennzeichnet, dass** der Interpreter (INTERP) Dialogelementen (CO1 bis CO4, RO, RO1 bis RO3) zur Beschreibung des Dialoges (TSPDD1, TSPDD2) verwendet, die von Steuerungsobjekten (CO1 bis CO4) und Darstellungsobjekten (RO, RO1 bis RO3) gebildet werden.

12. Verfahren nach Anspruch 1, **dadurch gekennzeichnet, dass** als erste und als zweite Beschreibungssprache unterschiedliche Beschreibungssprachen verwendet werden.

13. Computersystem (CS) mit mindestens einem Endgeräten (TE1 bis TE5), das mit einer Benutzerschnittstelle (UI1 bis UI5) für eine Mensch - Computer Interaktion zwischen einem Nutzer (A, B, C) und dem Endgerät (TE1 bis TE5) versehen ist,
**dadurch gekennzeichnet, dass** das Computersystem (CS) mit einer Speichereinheit (UIDB) versehen ist, in der eine allgemeine, deklarativ beschriebene Beschreibung (UUID) der Mensch - Computer Interaktion kodiert in einer ersten Beschreibungssprache abgespeichert ist, dass das Computersystem (CS) mit einem Interpreter (INTERP) versehen ist, der so ausgestaltet ist, dass er auf die abgespeicherte allgemeine Beschreibung (UUID) und auf einen endgerätespezifischen Datensatz (TUID1 bis TUID5) zugreift, der die multi-modalen Eingabemöglichkeiten und/oder Präferenzen des Endgerätes (TE1 bis TE5) beschreibt, und der gemäß der allgemeinen Beschreibung (UUID) der Mensch - Computer Interaktion und den multi-modalen Eingabemöglichkeiten und/oder Präferenzen des Endgerätes mindestens einen endgerätespezifischen Dialoge (TSPDD1, TSDD2) kodiert in einer zweiten Beschreibungssprache erstellt, und dass das Computersystem (CS) mit einer Steuereinheit (CONTR) zur Abarbeitung des mindestens einen Dialoges (TSPDD1) versehen ist.

14. Server (SERV1 bis SERV3) eines Computersystems mit mindestens einem Endgeräten (TE1 bis TE5), das mit einer Benutzerschnittstelle (UI1 bis UI5) für eine Mensch - Computer Interaktion zwischen einem Nutzer (A, B, C) und dem Endgerät (TE1 bis TE5) versehen ist,
**dadurch gekennzeichnet, dass** der Server (SERV1 bis SERV3) mit einer Speichereinheit (UIDB) versehen ist, in der eine allgemeine, deklarativ beschriebene Beschreibung (UUID) der Mensch - Computer Interaktion kodiert in einer ersten Beschreibungssprache abgespeichert ist, dass der Server (SERV1 bis SERV3) mit einem Interpreter (INTERP) versehen ist, der so ausgestaltet ist, dass er auf die abgespeicherte allgemeine Beschreibung (UUID) und auf einen endgerätespezifischen Datensatz (TUID1 bis TUID5) zugreift, der die multi-modalen Eingabemöglichkeiten und/oder Präferenzen des Endgerätes (TE1 bis TE5) beschreibt, und der gemäß der allgemeinen Beschreibung (UUID) der Mensch - Computer Interaktion und den multi-modalen Eingabemöglichkeiten und/oder Präferenzen des Endgerätes mindestens einen endgerätespezifischen Dialoge (TSPDD1) kodiert in einer zweiten Beschreibungssprache erstellt.

15. Endgeräten(TE2) mit einer Benutzerschnittstelle (U12) für eine Mensch - Computer Interaktion zwischen einem Nutzer (A, B, C) und einem Endgerät (TE2),
**dadurch gekennzeichnet, dass** das Endgerät (TE2) mit einem Interpreter (INTERP) versehen ist, der so ausgestaltet ist, dass er auf eine allgemeine, deklarativ beschriebene Beschreibung (UUID) der Mensch - Computer Interaktion kodiert in einer ersten Beschreibungssprache und auf einen endgerätespezifischen Datensatz (TUID1 bis TUID5) zugreift, der die multi-modalen Eingabemöglichkeiten und/oder Präferenzen des Endgerätes (TE1 bis TE5) beschreibt, dass der Interpreter (INTERP) weiter so ausgestaltet ist, dass er gemäß der allgemeinen Beschreibung (UUID) der Mensch - Computer Interaktion und den multi-modalen Eingabemöglichkeiten und/oder Präferenzen des Endgerätes mindestens einen endgerätespezifischen Dialoge (TSPDD2) kodiert in einer zweiten Beschreibungssprache erstellt, und dass das Endgerät (TE2) mit einer Steuereinheit (CONTR) zur Abarbeitung des mindestens einen Dialoges (TSPDD2) versehen ist.
